# EUROPEAN PATENT SPECIFICATION

(11) **EP 2 997 830 B1**
(45) Date of publication and mention of the grant of the patent: **12.09.2018**
(21) Application number: 15176407.3
(22) Date of filing: 13.07.2015
(51) Int. Cl.: A23J 1/10, A23K 40/25, A23K 10/26, A23K 50/40

(54) **A REFORMING PROCESS OF ANIMAL SKIN FOR DOG CHEW**
REFORMIERVERFAHREN VON TIERISCHER HAUT FÜR HUNDEKAUARTIKEL
PROCÉDÉ DE REFORMAGE POUR UNE PEAU D'ANIMAL CANIN À MÂCHER

(30) Priority: 15.07.2014 CN 201410336605
(43) Date of publication of application: 23.03.2016
(73) Proprietor: Wenzhou Yuanfei Pet Toys Products Co., Ltd., Wenzhou Zhejiang 325000 (CN)
(72) Inventor: ZHUANG, Mingyun, 325000 Shuitou Town, Pingyang Country, Wenzhou (CN); ZHU, Xiaorong, 325000 Shuitou Town, Pingyang Country, Wenzhou (CN)
(74) Representative: ABG Patentes, S.L.

(56) References cited:
- CN-A- 1 543 782
- CN-A- 102 845 584
- CN-A- 103 549 109
- GB-A- 2 395 416
- US-A1- 2004 010 122
- J. F. FOLADOR ET AL: "Fish meals, fish components, and fish protein hydrolysates as potential ingredients in pet foods", JOURNAL OF ANIMAL SCIENCE, vol. 84, no. 10, 1 October 2006 (2006-10-01), pages 2752-2765, XP055216085, ISSN: 0021-8812, DOI: 10.2527/jas.2005-560

## Description

### Field of the invention

The present invention relates to the field of animal skin reforming, and particularly relates to a reforming process of animal skin for dog chew.

### Background of the invention

As technology advances, more and more widespread applications of animal skins are found. Currently, the application of animal skins in the manufacture of dog chew is one of the widespread applications.

A dog chew is a pet toy or food, which has the function of facilitating cleaning of mouth cavity of a dog. Dog chew is generally made in shapes of a bone, a ball, a ring, a rod, a shoe, and the like. For the manufacture of a dog chew, the raw materials used are generally required to be intact and non-defective animal skins with suitably specialized size. For whole pieces of animal skins purchased form the market, the non-defective ones are expensive and have relatively high utilization rate, while the defective ones are less expensive but have low utilization rate and readily generate a large quantity of leftover bits and pieces.

As a result, how to efficiently utilize the large quantity of leftover bits and pieces is a currently common concern for each manufacturer. At present, most manufacturers solve this problem by pulverizing small pieces of skin to obtain skin granules, which is then blended with edible adhesives such as gelatin and the like, followed by extrusion or injection molding to obtain skin-containing sheets or skin-containing product in other shapes, such as a bone shape, a crab shape, a fish shape or other shapes; the obtained sheets can also be processed into other shapes, such as a knotted bone shape.

Document CN 1543782 A discloses a process for manufacturing a pet chew comprising soaking skin particles in water at room temperature, charging soaked particles, water and gelatin into a kneading machine and heating up the mixture.

Document GB 2395416 A refers to a process for producing artificial rawhide, comprising extruding a sol or a gel of collagen fibers prepared by mixing collagen fibers with a binder and water at a temperature not causing degeneration of the collagen fibers, and drying the extruded sol or gel.

Although the current process used by manufactures achieves exploitation of the leftover bits and pieces, it still has the following drawbacks:
I. The pulverized skin granules are large and do not reach a status of collagen fibers through cellulose degradation, thus have no adhesive force between granules. Therefore, gelatin and other adhesives are required to adhere the granules together, as a result, the products obtained have a heterogeneous structure and a low product quality.
II. Gelatin as an adhesive is hard and brittle after drying, thus it is difficult to perform the subsequent knotting process.

Therefore, how to provide homogeneous structure to the reformed animal skins, and how to make the animal skins soft so as to facilitate the subsequent knotting process are problems to be addressed urgently by those skilled in the art.

### Summary of the invention

One object of the present invention is to provide a reforming process of animal skin for dog chew, such that the produced animal skin is soft and has homogeneous structure, and the subsequent produced dog chew is more suitable for eating and play by dogs and other pets.

In order to solve the above problem, the present invention provides a reforming process of animal skin for dog chew, comprising the steps of:
1) Pulverizing leftover bits and pieces of skin, wherein the pulverized skin granules have particle sizes of 0.5 mm- 20 mm;
2) Soaking the skin granules in water at a temperature of 40°C-65°C for a time of 2h; to 3h
3) Melting the soaked skin granules at a predetermined temperature of 30°C-60 °C into colloid, and extruding the colloid under a predetermined pressure to form a whole piece of animal skin. wherein the leftover bits and pieces are those of cow skin and wherein the method does not comprise the addition of gelatin or any other adhesive.

Preferably, in the reforming process of animal skin for dog chew above, step 3) is performed in an extruder.

Preferably, in above the reforming process of animal skin for dog chew, the following step is comprised between the step 2) and the step 3):
21) adding a protein mixture into the soaked skin granules.

Preferably, in the above reforming process of animal skin for dog chew, the protein mixture is a plant protein, an animal protein or a mixture of the both, wherein the plant protein is a mixture of one or more of soy protein concentrate, soy protein isolate, wheat gluten, hordein, avenin and kafirin; and the animal protein is a mixture of one or more of collage, casein, animal glue and keratin.

Preferably, in the above reforming process of animal skin for dog chew, the step 3) further comprises adding a flavoring agent into the skin granules.

Preferably, the step 3) further comprises adding a nutrient into the skin granules, wherein the nutrient is a combination of one or more of vegetable, fruit, meat of beast, bird or fish, vitamin, chlorophyll, mineral and grain.

As can be seen from the above technical solutions, the reforming process of animal skin for dog chew disclosed in the present invention comprises firstly pulverizing leftover bits and pieces of skin, wherein pulverized granules have particle sizes of 0.5 mm- 20 mm; then soaking the skin granules in clear water for a time of 2h to 3h and finally melting the soaked skin granules at a predetermined temperature into colloid, such as defined in claim 1 and extruding the colloid under a predetermined pressure to form a whole piece of animal skin.

The leftover bits and pieces of skin are pulverized into small skin granules having particle sizes of 0.5 mm- 20 mm. These skin granules of small particle size can easily absorb water during the soaking to achieve saturated condition, which facilitates rapid melting of the small skin granules into collagen and elastin under a heating condition. When the skin granules which have achieved saturated condition are heated to the predetermined temperature, all the small skin granules are melted into collagen and elastin. The inherent viscosity property of collagen merges all the small skin granules into colloidal state. The colloidal material is then extruded under predetermined pressure to form a whole piece of animal skin.

It follows that, in the reforming process of animal skin for dog chew disclosed in the present invention, small skin granules are melted into collagen and elastin, and are reformed into animal skin by the viscosity property of collagen per se, instead of by adding gelatin and other adhesives. Since the small skin granules have been melted into collagen and elastin, the reformed animal skin has homogeneous structure and no granular sensation, thus has high product quality. Furthermore, since no gelatin or other adhesives is added, the reformed animal skin has excellent flexibility almost without difference compared to the flexibility of original animal skin, which makes the subsequent knotting process easy and convenient.

### Brief description of the figure

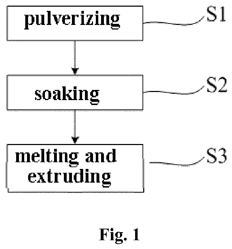

Figure. 1 is a flow chart of the reforming process of animal skin for dog chew provided in an example of the present invention.

### Detailed description of the invention

The focus of the present invention is to provide a reforming process of animal skin for dog chew, such that the produced animal skin is soft and has homogeneous structure, and the subsequently produced dog chew is more suitable for eating and play by dogs and other pets.

In order that those skilled in the art can better understand the solutions of the present invention, the present invention will be descripted in detail with reference to figure and specific embodiments of the present invention.

Referring to figure 1, which is a flow chart of the reforming process of animal skin for dog chew provided in an example of the present invention, and the reforming process of animal skin for dog chew disclosed in the example comprises the steps of:
Step 1) pulverizing, in particular, pulverizing the residual leftover bits and pieces of animal skin using a pulverizer, wherein the pulverized skin granules have particle sizes controlled within a range of 0.5 mm- 20 mm, preferably small skin granules with particle sizes of 0.5 mm, 2 mm and 3 mm.
   It should be noted that, during pulverizing, the leftover bits and pieces of animal skin may be in a wet state or a dry state, as long as they can be pulverized to the particle sizes required in the process. In the present invention, there is no limitation on the state of the leftover bits and pieces of animal skin during pulverizing. However, leftover bits and pieces of animal skin having a moisture content of about 50% are the most preferred, since such leftover bits and pieces of animal skin are not too soft, and can be pulverized easily by the pulverizer without damage to the pulverizer.
Step 2) soaking, in particular, soaking the skin granules in clear water for a time which should not less than 2 h, such that the skin granules can sufficiently absorb water and swell, which facilitates subsequent rapid decompose by heating.
   The temperature of the clear water does not have too much effect on the step. However, in general, the required soaking time tends to decrease as water temperature is increased. For example, the required soaking time is 2.5 h when the water temperature is 50 °C, the required soaking time is 3 h when the water temperature is 40 °C, and the skin granules need soaking in water for 24 h to sufficiently absorb water and swell when the water temperature is 10 °C. Therefore, in the present invention, the water temperature is preferably controlled within a range of 40 °C - 65 °C. Correspondingly, the soaking time is within a range of 2h - 3 h. This is primarily due to, on one hand, a sufficient absorption of water by the skin granules can be ensured, and on the other hand, the soaking time can be effectively shorten, when can increase production efficiency.
Step 3) melting and extruding, in particular, heating soaked skin granules to a predetermined temperature, and extruding under a predetermined pressure to form a whole piece of animal skin. In general, the predetermined temperature in the step is within a range of 30 °C- 60 °C, such that the skin granules are sufficiently melted into collagen and elastin to form colloidal material, at the same time, coking of the collagen and elastin can be effectively prevented.

For convenience, step 3) is typically performed in an extruder, and the two processes, the heating of the skin granules and the extrusion of the colloidal material can be performed in an extruder simultaneously. The shape and size of the produced whole piece of animal skin are associated with the cutterblock at the end of the extruder. For example, the whole piece of animal skin extruded through the extruder is an elliptical animal skin when the cutterblock is set as an elliptical shape, and a the whole piece of animal skin produced rectangular animal skin when the cutterblock is set as a rectangular shape.

Since the leftover bits and pieces of skin are pulverized into small skin granules having particle sizes of 0.5 mm- 20 mm in the above examples, the skin granules of small particle size can easily absorb water during the soaking to achieve saturation condition, which facilitates rapid melting of the small skin granules into collagen and elastin under heating condition. When the skin granules which have achieved saturation condition are heated to the predetermined temperature, all the small skin granules will be melted into collagen and elastin. The inherent viscosity property of collagen merges all the small skin granules into colloidal state. The colloidal material is then extruded under a predetermined pressure to form a whole piece of animal skin.

It follows that, in the reforming process of animal skin for dog chew disclosed in the present invention, small skin granules are melted into collagen and elastin, and are reformed into animal skin by the viscosity property of collagen per se, instead of by adding gelatin and other adhesives. Since the skin granules of small particle size have been melted into collagen and elastin, the reformed animal skin has homogeneous structure and no granular sensation, thus has a high product quality. Furthermore, since no gelatin or other adhesives is added, the reformed animal skin has excellent flexibility, which almost has no difference compared to the flexibility of original animal skin, making the subsequent knotting process easy and convenient.

In order to further optimize the embodiments in the above examples to provide foods or toys with higher protein content for pets, preferably, step 2.1.): adding a protein mixture into the soaked skin granules is added between the step 2) and the step 3) in the example.

It should be noted that, the protein mixture in the example is a plant protein, an animal protein or a mixture of the both, wherein the plant protein a mixture of one or more of soy protein concentrate, soy protein isolate, wheat gluten, hordein, avenin and kafirin; and the animal protein is a mixture of one or more of collage, casein, animal glue and keratin.

The addition of the protein mixture can not only increase the nutritional components of the dog chew, but also facilitate the reforming of the animal skin, since the inherent viscosity property of protein makes it easier to adhere the melted skin granules together.

Of course, in addition thereto, nutrients can be added into the skin granules, in particular, nutrients can be added into the skin granules in step S3), wherein the nutrients typically are a combination of one or more of vegetable, fruit, meat of beast, bird or fish, vitamin, chlorophyll, mineral and grain.

In views of mouthfeel, in the reforming process of animal skin provided in the example, the step 3) further comprises adding a flavoring agent into the skin granules. The flavoring agent and the colloidal material are fully mixed in the extruder, such that the dog chew produced by the reforming process of animal skin has better mouthfeel.

The flavoring agent is typically stew material, bone broth, flavorant and other flavoring agents, which can increase the mouthfeel of the dog chew.

The particular reforming process of cow skin for dog chew is provided in the following, the particular process of other animal skin can refer to the particular process of cow skin.

### Example 1

Leftover bits and pieces of pig and cow skins were pulverized into granules with particle size of 2 mm, and then soaked in warm water at a temperature of 60 °C for 2 h. The pig skin granules were removed and placed into an extruder. The extrusion temperature of the extruder was adjusted to 35 °C to obtain whole pieces of reformed cow skin from the end of the extruder.

The pig and cow skins were cut into strips, and then subjected to knotting process to form dog chews in bone shape. Such dog chews have fine and smooth surface, good toughness, without hard and brittle phenomenon, can meet the requirements for play or eating by pets, and do not cause harm to the mouth of dogs and other pets.

### Example 2

Leftover bits and pieces of cow skins were pulverized into granules with particle size of 3 mm, and then soaked in warm water at a temperature of 45 °C for 2.5 h. The pig skin granules were removed and placed into an extruder. The extrusion temperature of the extruder was adjusted to 45 °C to obtain whole pieces of reformed cow skin from the end of the extruder.

The cow skins were cut into strips, and then subjected to knotting process to form dog chews in bone shape. Such dog chews have fine and smooth surface, good toughness, without hard and brittle phenomenon, can meet the requirements for play or eating by pets, and do not cause harm to the mouth of dogs and other pets. Comparative Example 3

Leftover bits and pieces of cow skins were pulverized into granules with particle size of 0.5 mm, and then soaked in warm water at a temperature of 30 °C for 12 h. The pig skin granules were removed and placed into an extruder. The extrusion temperature of the extruder was adjusted to 50 °C to obtain whole pieces of reformed cow skin from the end of the extruder.

The cow skins were cut into strips, and then subjected to knotting process to form dog chews in bone shape. Such dog chews have fine and smooth surface, good toughness, without hard and brittle phenomenon, can meet the requirements for play or eating by pets, and do not cause harm to the mouth of dogs and other pets.

As shown above, the animal skin reformed by the reforming process of animal skin for dog chew disclosed herein fully meet the requirements in in the manufacture of dog chew, and, at the same time, overcome the drawbacks of the current animal skin reforming process, i.e., heterogeneous structures, containing granules, and being hard and brittle.

## Claims

1. A reforming process of animal skin for dog chew, comprising the steps of:
1) pulverizing leftover bits and pieces of skin, wherein pulverized skin granules have particle sizes of 0.5 mm- 20 mm;
2) soaking the skin granules in water at a temperature of 40°C-65°C for a time of 2 h to 3 h; and
3) melting the soaked skin granules at a predetermined temperature of 30°C-60°C into colloid, and extruding the colloid to form a whole piece of animal skin,
wherein the leftover bits and pieces of skin are those of cow skin, and
wherein the method does not comprise the addition of gelatin or any other adhesive.

2. The reforming process of animal skin for dog chew according to claim 1, **characterized in that** the step 3) is performed in an extruder.

3. The reforming process of animal skin for dog chew according to claim 1, **characterized in that** a following step is comprised between the step 2) and the step 3):
2.1.) adding a protein mixture into the soaked skin granules.

4. The reforming process of animal skin for dog chew according to claim 3, **characterized in that** the protein mixture is a plant protein, an animal protein or a mixture of the both, wherein the plant protein is a mixture of one or more of soy protein concentrate, soy protein isolate, wheat gluten, hordein, avenin and kafirin; and the animal protein is a mixture of one or more of collage, casein, animal glue and keratin.

5. The reforming process of animal skin for dog chew according to claim 1, **characterized in that** the step 3) further comprises adding a flavoring agent into the skin granules.

6. The reforming process of animal skin for dog chew according to claim 1, **characterized in that** the step 3) further comprises adding a nutrient into the skin granules, wherein the nutrient is a combination of one or more of vegetable, fruit, meat of beast, bird or fish, vitamin, chlorophyll, mineral and grain.

## Patentansprüche

1. Reformierverfahren für Tierhaut für Hundekausnacks, umfassend die Schritte:
1) Pulverisieren Restfetzen und -stücke von Haut, wobei das Granulat der pulverisierten Haut Teilchengrößen von 0,5 mm bis 20 mm aufweist;
2) Einweichen des Hautgranulats in Wasser bei einer Temperatur von 40 °C bis 65 °C während 2 h bis 3 h; und
3) Schmelzen des eingeweichten Hautgranulats bei einer vorbestimmten Temperatur von 30 °C bis 60 °C zu Kolloid und Extrudieren des Kolloids unter Bildung eines ganzen Stücks Tierhaut;
wobei die Restfetzen und -stücke von Haut solche von Kuhhaut sind; und
wobei das Verfahren keine Zugabe von Gelatine oder irgendeines anderen Klebers umfasst.

2. Reformierverfahren für Tierhaut für Hundekausnacks gemäß Anspruch 1, **dadurch gekennzeichnet, dass** Schritt 3) in einem Extruder durchgeführt wird.

3. Reformierverfahren für Tierhaut für Hundekausnacks gemäß Anspruch 1, **dadurch gekennzeichnet, dass** zwischen Schritt 2) und Schritt 3) der folgende Schritt durchgeführt wird:
2.1.) Hinzufügen eines Proteingemischs zu dem eingeweichten Hautgranulat.

4. Reformierverfahren für Tierhaut für Hundekausnacks gemäß Anspruch 3, **dadurch gekennzeichnet, dass** das Proteingemisch ein Pflanzenprotein, ein Tierprotein oder ein Gemisch von beiden ist, wobei das Pflanzenprotein ein Gemisch von einem oder mehreren aus einem Sojaproteinkonzentrat, Sojaproteinisolat, Weizengluten, Hordein, Avenin und Kafirin ist und das Tierprotein ein Gemisch von einem oder mehreren aus Collagen, Casein, Tierleim und Keratin ist.

5. Reformierverfahren für Tierhaut für Hundekausnacks gemäß Anspruch 1, **dadurch gekennzeichnet, dass** Schritt 3) weiterhin die Zugabe eines Aromastoffs zu dem Hautgranulat umfasst.

6. Reformierverfahren für Tierhaut für Hundekausnacks gemäß Anspruch 1, **dadurch gekennzeichnet, dass** Schritt 3) weiterhin das Hinzufügen eines Nährstoffs zu dem Hautgranulat umfasst, wobei der Nährstoff eine Kombination von einem oder mehreren aus Gemüse, Obst, Fleisch von Säugern, Vögeln oder Fischen, Vitaminen, Chlorophyll, Mineralien und Körnern ist.

## Revendications

1. Un procédé de reformage de peau d'animal pour objet à mâcher pour chien, comprenant les étapes consistant à :
1) pulvériser des restes de bouts et morceaux de peau, les granulés de peau pulvérisés ayant des dimensions de particules de 0,5 mm à 20 mm ;
2) faire tremper les granulés de peau dans de l'eau à une température de 40 °C à 65 °C pendant un temps de 2 h à 3 h ; et
3) faire fondre les granulés de peau trempés à une température prédéterminée de 30 °C à 60 °C en un colloïde, et extruder le colloïde pour former un morceau entier de peau d'animal,
les restes de bouts et morceaux de peau étant ceux d'une peau de vache, et
le procédé ne comprenant pas l'addition de gélatine ou de tout autre adhésif.

2. Le procédé de reformage de peau d'animal pour objet à mâcher pour chien selon la revendication 1, **caractérisé en ce que** l'étape 3) est effectuée dans une extrudeuse.

3. Le procédé de reformage de peau d'animal pour objet à mâcher pour chien selon la revendication 1, **caractérisé en ce qu'**une étape suivante est comprise entre l'étape 2) et l'étape 3) consistant à :
2.1.) ajouter un mélange de protéines dans les granulés de peau trempés.

4. Le procédé de reformage de peau d'animal pour objet à mâcher pour chien selon la revendication 3, **caractérisé en ce que** le mélange de protéines est une protéine végétale, une protéine animale ou un mélange des deux, la protéine végétale étant un mélange d'un ou de plusieurs éléments parmi un concentré de protéines de soja, un isolat de protéines de soya, le gluten de blé, l'hordéine, l'avénine et la kafirine ; et la protéine animale étant un mélange d'un ou de plusieurs éléments parmi le collagène, la caséine, une colle animale et la kératine.

5. Le procédé de reformage de peau d'animal pour objet à mâcher pour chien selon la revendication 1, **caractérisé en ce que** l'étape 3) comprend en outre l'addition d'un agent aromatisant dans les granulés de peau.

6. Le procédé de reformage de peau d'animal pour objet à mâcher pour chien selon la revendication 1, **caractérisé en ce que** l'étape 3) comprend en outre l'addition d'un nutriment dans les granulés de peau, le nutriment étant une combinaison d'un ou de plusieurs éléments parmi les légumes, les fruits, la viande d'animaux, d'oiseaux ou de poissons, une vitamine, la chlorophylle, un minéral et une graine.
